# EUROPÄISCHE PATENTSCHRIFT

(11) **EP 1 333 890 B1**
(45) Veröffentlichungstag und Bekanntmachung des Hinweises auf die Patenterteilung: **08.09.2004**
(21) Anmeldenummer: 01996409.7
(22) Anmeldetag: 03.11.2001
(51) Int. Cl.: A62D 3/00

(54) **VERFAHREN ZUR INERTISIERUNG VON STAUBFÖRMIGEN SILIZIUMMETALLHALTIGEN RÜCKSTÄNDEN**
METHOD FOR RENDERING INERT DUST RESIDUE CONTAINING SILICON METAL
PROCEDE D'INERTISATION DE RESIDUS POUSSIEREUX A TENEUR EN METAL DE SILICIUM

(30) Priorität: 15.11.2000 DE 10056722
(43) Veröffentlichungstag der Anmeldung: 13.08.2003
(73) Patentinhaber: SOLARWORLD AKTIENGESELLSCHAFT, 53113 Bonn (DE)
(72) Erfinder: WERKMEISTER, Jörg, 09599 Freiberg (DE); WEBER, Rainer, 51519 Odenthal (DE)
(74) Vertreter: Rau, Albrecht
(86) Internationale Anmeldenummer: PCT/EP2001/012755
(87) Internationale Veröffentlichungsnummer: WO 2002/040103

(56) Entgegenhaltungen:
- EP-A- 0 416 584
- EP-A- 0 428 337
- EP-A- 0 433 600
- EP-A- 0 657 461
- EP-A- 0 731 064
- EP-A- 0 867 442

## Beschreibung

Die Erfindung betrifft ein Verfahren zur Inertisierung von staubförmigen siliziummetallhaltigen Rückständen der Trichlorsilansynthese im Wirbelbett sowie die Verwertung dieser inertisierten Rückstände in metallurgischen Prozessen.

Die Herstellung von Trichlorsilan erfolgt gemäß "Studies in Organic Chemistry 49: Catalyzed Direct Reactions of Silicon", Elsevier, 1993, S. 445 bis 457 im technischen Maßstab durch Reaktion von metallurgischem Silizium mit Chlorwasserstoff oder durch Reaktion von Silizium mit Tetrachlorsilan und Wasserstoff. Diese Prozesse werden in der Regel in Wirbelbettreaktoren sowohl mit Zusatz von Katalysatoren, wie beispielsweise Kupfermetall oder Kupferverbindungen, als auch ohne Zusatz von Katalysatoren durchgeführt.

Allen Prozessen gemeinsam ist, dass das Wirbelbett verlassende trichlorsilanhaltige gasförmige Produktgemisch mit festem, Silizium- und gegebenenfalls katalysatorhaltigem Staub verunreinigt ist. Die Entfernung dieses Staubes erfolgt durch Abscheidung in einem oder mehreren hintereinander geschalteten Zyklonen oder durch Heißgasfiltration mit Keramik- oder Sintermetallkerzen. Gegebenenfalls noch im gasförmigen trichlorsilanhaltigen Produktgemisch verbliebene Staubreste werden anschließend durch Wäsche mit flüssigen Chlorsilanen entfernt.

Alternativ hierzu sind auch Verfahren bekannt, bei denen der Staub ausschließlich durch Wäsche mit flüssigen Chlorsilanen oder durch Totalkondensation des Produktgemisches und nachfolgende Destillation ohne vorherige Abscheidung mit Zyklonen oder Heißgasfiltern aus dem trichlorsilanhaltigen Produktgemisch entfernt wird. Die dabei anfallenden chlorsilan- und staubhaltigen Suspensionen werden in der Regel aufgearbeitet um die Chlorsilane zurückzugewinnen.

Gemäß den Verfahren der DE 36 42 285 C1, DE 37 09 577 A1, DE 39 41 825 A1, DE 39 41 827 A1, DE 41 16 925 A1, DE 41 30 880 A1, DE 41 30 881 A1, DE 42 43 223 C1, EP 0 201 200 A1, EP 0 527 309 A1, US 4,690,810 kann die Aufarbeitung durch Destillation erfolgen, wobei ein Silizium-, metallchlorid- und gegebenenfalls katalysatorhaltiger Destillationssumpf erhalten wird, der nach einer Inertisierung mit Alkali oder Behandlung mit Wasserdampf entsorgt werden muss. Eine Verwertung der dabei anfallenden Gemische von hydrolysierten Metallchloriden und hydrolysierten Chlorsilanen, beipielsweise in metallurgischen Prozessen, ist wegen der hohen Gehalte an Chlorid und den niedrigen Gehalten an wertvollen Metallen, insbesondere Siliziummetall, nicht wirtschaftlich. Wenn man zu einem verwertbaren Produkt kommen will, ist es deshalb sinnvoll, die festen staubförmigen Bestandteile des trichlorsilanhaltigen Produktgemisches der Trichlorsilansynthese vor der Gaswäsche bzw. vor der Totalkondensation weitestgehend abzutrennen und separat aufzuarbeiten.

Der dabei in den Zyklonen bzw. im Heißgasfilter anfallende Staub ist, abhängig von den Betriebsbedingungen der Wirbelbettreaktion, von der Zusammensetzung des eingesetzten metallurgischen Siliziums und dem Einsatz von Katalysatoren unterschiedlich zusammengesetzt. Er besteht im wesentlichen aus nicht reagierten Resten des eingesetzten metallurgischen Siliziums, Chloriden wie FeCl₂ und CaCl₂, und gegebenenfalls dem Katalysator bzw. einer Katalysatorverbindung. Dieses staubförmige Material ist hochreaktiv und muss vor einer Verwertung inertisiert werden. Unter Inertisierung wird dabei verstanden, dass die Reaktivität des staubförmigen Materials reduziert und dessen Handhabbarkeit verbessert wird.

Nach EP-A1-0 201 200 kann die Inertisierung durch Mischen des staubförmigen Materials mit Wasser und Granulation der Mischung erfolgen. Das dabei anfallende Produkt ist zwar inertisiert, kann jedoch aufgrund des hohen Chloridgehaltes und des niedrigen pH-Wertes, verbunden mit der leichten Eluierbarbeit von Metallionen, nicht direkt bei metallurgischen Prozessen als Rohstoff verwertet werden, was eine Aufarbeitung des Produktes erfordert.

Die DE-Cl-195 07 602 beschreibt eine andere Möglichkeit zur Inertisierung, die darin besteht, das staubförmige Material in wässriger Suspension mit Alkaliverbindungen wie beispielsweise NaOH, CaO, Na₂CO₃, NaHCO₃ oder Zement umzusetzen und nachfolgend zu filtrieren. Auch bei diesem Vorgehen wird eine Inertisierung erreicht, jedoch sind die entstehenden Suspensionen oft schlecht filtrierbar, was zu Filterkuchen mit hohen Wasser- und Chloridgehalten führt. Auch solche Produkte sind in metallurgischen Prozessen nicht direkt als Rohstoff verwertbar und müssen einer aufwendigen Nachbehandlung zugeführt werden.

Aus der EP 0 416 584 A1 ist die Verwendung eines beheizbaren Feststoffmischers sowie eines beheizbaren Flugscharmischers im Rahmen von Prozessen der chemischen Verfahrenstechnik bekannt.

Die EP 0 438 337 A2 offenbart ein Verfahren zur Inertisierung siliciummetallhaltiger Rückstände, die im Rahmen der Bildung organischer Halogenid-Silanverbindungen entstehen. Hierbei werden diese Rückstände mit Wasser und einer Alkaliverbindung versetzt. Die Rückstände werden dabei einer vorher auf 50 bis 100°C erwärmten wässrigen basischen Lösung zugesetzt und anschließend filtriert.

Aus der EP 0 433 600 A2 ist ein Verfahren zur Aufarbeitung siliziumhaltiger Rückstände mit Kalzium-Basen oder Kalzium-Carbonat bekannt.

Der vorliegenden Erfindung liegt die Aufgabe zugrunde, ein Verfahren zur Inertisierung von staubförmigen siliziummetallhaltigen Rückständen der Trichlorsilansynthese zur Verfügung zu stellen, das in einfacher Weise zu verwertbaren siliziummetallhaltigen Materialen führt, die in metallurgischen Prozessen verwertet werden können.

Gelöst wird diese Aufgabe durch ein Verfahren zur Inertisierung von staubförmigen siliziummetallhaltigen Rückständen der Trichlorsilansynthese, welches dadurch gekennzeichnet ist, dass die Inertisierung in mehreren Schritten durchgeführt wird, wobei in einem ersten Schritt die Rückstände mit Wasser in einer Menge von 10 bis 50 Gew.-% bezogen auf die Rückstandsmenge und einer bezogen auf den Chloridgehalt des Rückstands mindestens äquimolaren Menge an Alkaliverbindung versetzt wird, anschließend oder gleichzeitig auf eine Temperatur von 50 bis 200°C erwärmt wird und in einem weiteren Schritt diese Mischung mit mindestens der zweifachen Menge an Wasser versetzt wird und schließlich durch Filtration und nachfolgende Wäsche mit Wasser weitgehend von gelösten Salzen befreit wird.

Es ist vorteilhaft, wenn die Alkaliverbindung in einem molaren Überschuss von 2 bis 10 % bezogen auf den Chloridgehalt der Rückstände eingesetzt wird. Als Alkaliverbindung können beispielsweise NaOH, Na₂CO₃, NaHCO₃, CaO, Ca(OH)₂ oder Zement eingesetzt werden. Bevorzugt sind CaO, Na₂CO₃ und Zement oder deren Mischungen.

In einer besonders bevorzugten Variante des erfindungsgemäßen Verfahrens wird die Mischung auf eine Temperatur im Bereich von 100 bis 150°C, bevorzugt 120 bis 140°C, erwärmt.

In einer Variante des erfindungsgemäßen Verfahrens wird die Mischung nach der Erwärmung auf 50 bis 200°C 10 bis 60 Minuten bei dieser Temperatur gehalten.

Bei der Durchführung des erfindungsgemäßen Verfahrens werden in der Regel Produkte erhalten, die einen Chloridgehalt von <1 Gew.-% bezogen auf die Trockensubstanz und einen Wassergehalt von <40 Gew.-% aufweisen. Solche Produkte können in metallurgischen Prozessen, wie beispielweise der Herstellung von Eisenlegierungen oder der Herstellung von Kupfer, ohne weitere Nachbehandlung eingesetzt werden können.

Die Herstellung der Mischung im ersten Schritt kann in einem üblichen beheizbaren Feststoff-Mischer erfolgen. Vorzugsweise werden Mischer mit eingebauten Mischwerkzeugen, wie beispielsweise Pflugscharmischer eingesetzt.

Die Filtration und Wäsche erfolgt vorzugsweise auf einer Filterpresse. Dabei hat sich gezeigt, dass für die Wäsche des Filterkuchens nur kleine Mengen an Wasser benötigt werden, um die gelösten Salze weitgehend zu entfernen. Die bevorzugte Menge an Wasser liegt im Bereich der 1,5 bis 2-fachen Menge bezogen auf die Masse des Filterkuchens.

Das erfindungsgemäße Verfahren wird nachfolgend anhand einiger Beispiele näher erläutert.

Für die Versuche wurden Proben eingesetzt, die in ihrer Zusammensetzung und in ihrem Silizium-Kornspektrum typischen staubförmigen siliziummetallhaltigen Rückständen der Umsetzung von metallurgischem Silizium mit Siliziumtetrachlorid und Wasserstoff zu Trichlorsilan entsprechen.

Die eingesetzten Proben hatten folgende Zusammensetzung:

| Probe A | | Probe B | |
|---|---|---|---|
| Si | 57,2 Gew.-% | Si | 48,4 Gew.-% |
| Fe | 4,8 Gew.-% | Fe | 18,7 Gew.-% |
| Cu | 26,0 Gew.-% | Cl | 29,0 Gew.-% |
| Cl | 10,2 Gew.-% | Rest (Ca u.a.) | 3,9 Gew.-% |
| Rest (Ca u.a.) | 1,8 Gew.-% | | |

Probe A entspricht in Ihrer Zusammensetzung einem Rückstand der Trichlorsilansynthese, die mit CuCl katalysiert wurde und bei der metallurgisches Silizium mit einem Fe-Gehalt von 0,4 Gew.-% eingesetzt wurde. Probe B entspricht in ihrer Zusammensetzung einem Rückstand der Trichlorsilansynthese, bei der metallurgisches Silizium mit einem Fe-Gehalt von 1,9 Gew.-% eingesetzt wurde.

### Beispiel 1 (Vergleichsbeispiel)

200 g Probe A wurden mit 20 g Zement und 1000 ml Wasser versetzt und auf 75°C erwärmt. Anschließend wurde mit 10 molarer Natronlauge ein pH-Wert von 8 in der Suspension eingestellt. Nach 60 min wurde die Suspension über eine Vakuumlabornutsche filtriert und mit 600 ml Wasser auf der Nutsche gewaschen. Der abgesaugte Filterkuchen hatte einen Wassergehalt von 44,5 Gew.-%.

### Beispiel 2 (Vergleichsbeispiel)

200 g Probe B wurden mit 20 g Zement und 1000 ml Wasser versetzt und auf 75°C erwärmt. Anschließend wurde mit 10 molarer Natronlauge ein pH-Wert von 8 in der Suspension eingestellt. Nach 60 min wurde die Suspension über eine Vakuumlabornutsche filtriert und mit 600 ml Wasser auf der Nutsche gewaschen. Der abgesaugte Filterkuchen hatte einen Wassergehalt von 70 Gew.-%.

### Beispiel 3 (Vergleichsbeispiel)

100 g Probe B wurde mit 45,5 g Na₂CO₃ (entspricht 1,05 mol pro mol Chlorid), 5 g Zement und 289 ml Wasser vermischt. Dabei stellte sich eine Temperatur von 35°C ein. Nach 45 Minuten wurde die Suspension über eine Vakuumlabornutsche filtriert und mit 250 ml Wasser auf der Nutsche gewaschen. Der abgesaugte Filterkuchen hatte einen Wassergehalt von 45,1 Gew.-% und einen Chloridgehalt von 0,24 Gew.-% bezogen auf die Trockensubstanz.

### Beispiel 4 (Vergleichsbeispiel)

100 g Probe A wurde mit 16 g Na₂CO₃ (entspricht 1,05 mol pro mol Chlorid), 5 g Zement und 14 ml Wasser vermischt. Dabei stellte sich eine Temperatur von 52°C ein. Nach 45 Minuten wurde die Mischung mit 250 ml Wasser versetzt und über ein Labordruckfilter bei einem Filtrationsdruck von 2,5 bar filtirert und anschließend mit 250 ml Wasser auf dem Druckfilter gewaschen. Der Filterkuchen hatte einen Wassergehalt von 26 Gew.-% und einen Chloridgehalt von 1,2 Gew.-% bezogen auf die Trockensubstanz.

### Beispiel 5 (Vergleichsbeispiel)

100 g Probe B wurde mit 45,5 g Na₂CO₃ (entspricht 1,05 mol pro mol Chlorid), 5 g Zement und 39 ml Wasser vermischt. Dabei stellte sich eine Temperatur von 53°C ein. Nach 45 Minuten wurde die Mischung mit 250 ml Wasser versetzt und über ein Labordruckfilter bei einem Filtrationsdruck von 2,5 bar filtriert und anschließend mit 250 ml Wasser auf dem Druckfilter gewaschen. Der Filterkuchen hatte einen Wassergehalt von 40,3 Gew.-% und einen Chloridgehalt von 1,4 Gew.-% bezogen auf die Trockensubstanz.

### Beispiel 6 (erfindungsgemäß)

100 g Probe A wurde mit 16 g Na₂CO₃ (entspricht 1,05 mol pro mol Chlorid) und 14 ml Wasser vermischt und auf 130°C erwärmt. Nach 45 Minuten wurde die Mischung mit 250 ml Wasser versetzt und über ein Labordruckfilter bei einem Filtrationsdruck von 2,5 bar filtriert und anschließend mit 250 ml Wasser auf dem Druckfilter gewaschen. Der Filterkuchen hatte einen Wassergehalt von 23,4 Gew.-% und einen Chloridgehalt von 0,27 Gew.-% bezogen auf die Trockensubstanz.

### Beispiel 7 (erfindungsgemäß)

100 g Probe A wurde mit 16 g Na₂CO₃ (entspricht 1,05 mol pro mol Chlorid), 5 g Zement und 14 ml Wasser vermischt und auf 130°C erwärmt. Nach 45 Minuten wurde die Mischung mit 250 ml Wasser versetzt und über ein Labordruckfilter bei einem Filtrationsdruck von 2,5 bar filtirert und anschließend mit 250 ml Wasser auf dem Druckfilter gewaschen. Der Filterkuchen hatte einen Wassergehalt von 25,5 Gew.-% und einen Chloridgehalt von 0,7 Gew.-% bezogen auf die Trockensubstanz.

### Beispiel 8 (erfindungsgemäß)

100 g Probe B wurde mit 45,5 g Na₂CO₃ (entspricht 1,05 mol pro mol Chlorid) und 39 ml Wasser vermischt und auf 130°C erwärmt. Nach 45 Minuten wurde die Mischung mit 250 ml Wasser versetzt und über ein Labordruckfilter bei einem Filtrationsdruck von 2,5 bar filtriert und anschließend mit 250 ml Wasser auf dem Druckfilter gewaschen. Der Filterkuchen hatte einen Wassergehalt von 32 Gew.-% und einen Chloridgehalt von 0,24 Gew.-% bezogen auf die Trockensubstanz.

### Beispiel 9 (erfindungsgemäß)

100 g Probe B wurde mit 45,5 g Na₂CO₃ (entspricht 1,05 mol pro mol Chlorid), 5 g Zement und 39 ml Wasser vermischt und auf 130°C erwärmt. Nach 45 Minuten wurde die Mischung mit 250 ml Wasser versetzt und über ein Labordruckfilter bei einem Filtrationsdruck von 2,5 bar filtriert und anschließend mit 250 ml Wasser auf dem Druckfilter gewaschen. Der Filterkuchen hatte einen Wassergehalt von 37 Gew.-% und einen Chloridgehalt von 0,38 Gew.-% bezogen auf die Trockensubstanz.

Wie die Beispiele zeigen, werden bei der Durchführung des erfindungsgemäßen Verfahrens Produkte erhalten, die Wassergehalte unterhalb 40 Gew.-% und Chloridgehalte unterhalb 1 Gew.-% (bezogen auf die Trockensubstanz) erhalten. Daher eignen sich diese Produkte besonders für eine Verwertung in metallurgischen Prozessen.

## Patentansprüche

1. Verfahren zur Inertisierung von staubförmigen siliziummetallhaltigen Rückständen der Trichlorsilansynthese, **gekennzeichnet durch** die folgenden Schritte:
- die Rückstände werden mit Wasser in einer Menge von 10 bis 50 Gew.-% bezogen auf die Rückstandsmenge und einer bezogen auf den Chloridgehalt des Rückstands mindestens äquimolaren Menge an Alkaliverbindung versetzt,
- die Mischung wird auf eine Temperatur von 50 bis 200°C erwärmt,
- die erwärmte Mischung wird mit mindestens der zweifachen Menge an Wasser versetzt und
- anschließend wird die Mischung **durch** Filtration und nachfolgende Wäsche mit Wasser weitgehend von gelösten Salzen befreit.

2. Verfahren nach Anspruch 1, **dadurch gekennzeichnet, dass** die Alkaliverbindung einen molaren Überschuss von 2 bis 10 % bezogen auf den Chloridgehalt der Rückstände aufweist.

3. Verfahren nach Anspruch 1 oder 2, **dadurch gekennzeichnet, dass** als Alkaliverbindung NaOH, Na₂CO₃, NaHCO₃, CaO, Ca(OH)₂ oder Zement eingesetzt werden.

4. Verfahren nach Anspruch 1 oder 2, **dadurch gekennzeichnet, dass** als Alkaliverbindung CaO, Na₂CO₃ und Zement oder deren Mischungen eingesetzt werden.

5. Verfahren nach einem der Ansprüche 1 bis 4, **dadurch gekennzeichnet, dass** die Mischung im ersten Schritt auf eine Temperatur im Bereich von 100 bis 150°C, bevorzugt 120 bis 140°C, erwärmt wird.

6. Verfahren nach einem der Ansprüche 1 bis 5, **dadurch gekennzeichnet, dass** die Mischung nach der Erwärmung 10 bis 60 min auf der erwärmten Temperatur gehalten wird.

7. Verfahren zur Durchführung eines metallurgischen Prozesses, insbesondere zur Herstellung von einer Eisenlegierung oder von Kupfer, mit folgenden Schritten:
a) Inertisieren von staubförmigen siliziummetallhaltigen Rückständen der Trichlorsilansynthese mit folgenden Inertisierungsschritten:
- die Rückstände werden mit Wasser in einer Menge von 10 bis 50 Gew.-% bezogen auf die Rückstandsmenge und bezogen auf den Chloridgehalt des Rückstands mindestens äquimolaren Menge an Alkaliverbindungen versetzt,
- die Mischung wird auf eine Temperatur von 50 bis 200°C erwärmt,
- die erwärmte Mischung wird mit mindestens der zweifachen Menge an Wasser versetzt und
- anschließend wird die Mischung durch Filtration und nachfolgende Wäsche mit Wasser weitgehend von gelösten Salzen befreit,
b) Verwerten dieser inertisierten Rückstände im nachfolgenden metallurgischen Prozess.

## Claims

1. A method for rendering inert dust residue containing silicon metal originating from the trichlorosilane synthesis, **characterised by** the following steps:
- the residues are mixed with 10 to 50 weight percent water, in relation to the quantity of residue, and an at least equimolar quantity of an alkaline compound, in relation to the chloride content of the residue;
- the mixture is heated to a temperature ranging from 50 to 200°C;
- the heated mixture is mixed with at least the double amount of water; and
- subsequently the mixture is extensively liberated from dissolved salts by filtration and subsequent washing with water.

2. A method according to Claim 1, **characterised in that** the alkaline compound is provided at a molar excess of 2 to 10%, in relation to the chloride content of the residues.

3. A method according to Claim 1 or 2, **characterised in that** the alkaline compounds used are NaOH, Na₂CO₃, NaHCO₃, CaO, Ca(OH)₂ or cement.

4. A method according to Claim 1 or 2, **characterised in that** the alkaline compounds used are CaO, Na₂CO₃ and cement or mixtures thereof.

5. A method according to any one of Claims 1 to 4, **characterised in that** in the first step the mixture is heated to a temperature ranging from 100 to 150°C, preferably 120 to 140°C.

6. A method according to any one of Claims 1 to 5, **characterised in that** after heating the mixture is maintained at this temperature for a period of 10 to 60 minutes.

7. A method for the execution of a metallurgical process, in particular for the production of an iron alloy or copper, comprising the following steps:
a) rendering inert dust residue containing silicon metal originating from the trichlorosilane synthesis, comprising the following steps of rendering inert:
- the residues are mixed with 10 to 50 weight percent water, in relation to the quantity of residue, and an at least equimolar quantity of an alkaline compound, in relation to the chloride content of the residue;
- the mixture is heated to a temperature ranging from 50 to 200°C;
- the heated mixture is mixed with at least the double amount of water; and
- subsequently the mixture is extensively liberated from dissolved salts by filtration and subsequent washing with water;
b) utilisation of these inert residues in the subsequent metallurgical process.

## Revendications

1. Procédé d'inertisation de résidus poussiéreux à teneur en métal de silicium de la synthèse de trichlorosilane, **caractérisé par** les étapes suivantes :
- les résidus sont mélangés avec de l'eau dans une quantité allant de 10 à 50 % en poids par rapport à la quantité de résidus et avec une quantité au moins équimolaire en composé alcalin par rapport à la teneur en chlorure du résidu,
- le mélange est chauffé à une température allant de 50 à 200°C,
- le mélange chauffé est mélangé avec au moins la quantité double d'eau, et
- le mélange est au final libéré dans une large mesure de sels dissous par filtration et par des lavages consécutifs.

2. Procédé selon la revendication 1, **caractérisé en ce que** le composé alcalin comporte un excédent molaire allant de 2 à 10 % par rapport à la teneur en chlorure des résidus.

3. Procédé selon la revendication 1 ou 2, **caractérisé en ce que** du NaOH, du Na₂CO₃, du NaHCO₃, du CaO, du Ca(OH)₂ ou du ciment sont utilisés comme composé alcalin.

4. Procédé selon la revendication 1 ou 2, **caractérisé en ce que** du CaO, du Na₂CO₃ et du ciment ou leurs mélanges sont utilisés comme composé alcalin.

5. Procédé selon l'une des revendications 1 à 4, **caractérisé en ce que** le mélange est chauffé dans la première étape à une température dans la gamme de 100 à 150°C, de préférence de 120 à 140°C.

6. Procédé selon l'une des revendications 1 à 5, **caractérisé en ce que** le mélange est maintenu après le chauffage et pendant 10 à 60 minutes à la température de chauffe.

7. Procédé pour la réalisation d'un processus métallurgique, en particulier pour la préparation d'un alliage de fer ou de cuivre, comprenant les étapes suivantes :
a) l'inertisation de résidus poussiéreux à teneur en métal de silicium de la synthèse de trichlorosilane avec les étapes d'inertisation suivantes :
- les résidus sont mélangés avec de l'eau dans une quantité allant de 10 à 50 % en poids par rapport à la quantité de résidus et par rapport à la quantité au moins équimolaire en composés alcalins par rapport à la teneur en chlorure du résidu,
- le mélange est chauffé à une température allant de 50 à 200°C,
- le mélange chauffé est mélangé avec au moins la quantité double d'eau, et
- le mélange est au final libéré dans une large mesure de sels dissous par filtration et par des lavages consécutifs,
b) l'utilisation de ces résidus inertisés dans le processus métallurgique suivant.
